# EUROPÄISCHE PATENTANMELDUNG

(11) **EP 3 623 997 A1**
(43) Veröffentlichungstag der Anmeldung: **18.03.2020**
(21) Anmeldenummer: 19193505.5
(22) Anmeldetag: 26.08.2019
(51) Int. Cl.: G06K 9/00

(54) **ANORDNUNG VON TOF-SENSOREN ZUR ERFASSUNG EINES PASSAGIERRAUMS EINES PEOPLEMOVERS, AUSWERTEEINRICHTUNG ZUM WAHRNEHMEN EINES PASSAGIERRAUMS EINES PEOPLEMOVERS UND WAHRNEHMUNGSSYSTEM ZUM WAHRNEHMEN EINES BLOCKIERENS EINER PASSAGIERTÜR EINES PEOPLEMOVERS, EINER ANZAHL VON PASSAGIEREN IN DEM PEOPLEMOVER UND VON POSITIONEN, KÖRPERPOSEN UND AKTIVITÄTEN DER PASSAGIERE**

(30) Priorität: 12.09.2018 DE 102018215513
(71) Anmelder: ZF Friedrichshafen AG, 88046 Friedrichshafen (DE)
(72) Erfinder: Angermayer, Jörg, 88046 Friedrichshafen (DE)

(57) **Zusammenfassung**

Anordnung von TOF-Sensoren zur Erfassung eines Passagierraums (2) eines Peoplemovers (1) bestehend aus einem ersten TOF-Sensor (10), der derart angeordnet ist, dass ein erstes Sichtfeld (11) des ersten TOF-Sensors (10) einen Bereich um eine Passagiertür (3) erfasst, um ein Blockieren der Passagiertür (3) zu erfassen und in dem Passagierraum (2) sich befindende Passagiere (4) zu zählen, und einem zweiten TOF-Sensor (20), der derart angeordnet ist, dass ein zweites Sichtfeld (21) des zweiten TOF-Sensors (20) die in dem Passagierraum (2) sich befindenden Passagiere (4) erfasst, um Position, Aktivität und/oder Körperpose der Passagiere (4) zu erfassen und die in dem Passagierraum (2) sich befindenden Passagiere (4) zu zählen. Ferner bezieht sich die Erfindung auf eine Auswerteeinrichtung (30) und ein Wahrnehmungssystem (40).

## Beschreibung

Die Erfindung bezieht sich auf eine Anordnung von TOF-Sensoren nach Anspruch 1 zur Erfassung eines Passagierraums eines Peoplemovers. Ferner bezieht sich die Erfindung auf eine Auswerteeinrichtung nach Anspruch 5 zum Wahrnehmen eines Passagierraums eines Peoplemovers. Außerdem bezieht sich die Erfindung auf ein Wahrnehmungssystem nach Anspruch 6 zum Wahrnehmen eines Blockierens einer Passagiertür eines Peoplemovers, einer Anzahl von Passagieren in dem Peoplemover und von Positionen, Körperposen und Aktivitäten der Passagiere.

Aus dem Stand der Technik sind Fahrzeuge zum Befördern von Personen und Gütern bekannt. Insbesondere Kleinbusse für Beförderung von Personen auf kurzen Strecken, zum Beispiel in Städten, Flughäfen oder Messen, auch als Peoplemover bezeichnet, sind Personenbeförderungsfahrzeuge.

Im Zuge der Automatisierung ist es wichtig, den Innenraum eines Personenbeförderungsfahrzeuges zu überwachen. Derzeit sind Busse im Personennahverkehr beispielsweise mit Kameras ausgerüstet, um die Eingangsbereiche der Busse zu überwachen.

Hier setzt die Erfindung an. Der Erfindung hat die Aufgabe zugrunde gelegen, die Überwachung von Passagierräumen von Kleinbussen hinsichtlich Sensortechnologie und Überwachungsmöglichkeiten zu verbessern mit einer möglichst geringen Anzahl von zu verwendeten Sensoren.

Die Aufgabe wird gelöst durch eine Anordnung von TOF-Sensoren mit den Merkmalen des Anspruchs 1. Ferner wird die Aufgabe gelöst durch eine Auswerteeinrichtung nach zum Wahrnehmen eines Passagierraums eines Peoplemovers mit den Merkmalen des Anspruchs 5. Außerdem wird die Aufgabe gelöst durch ein Wahrnehmungssystem zum Wahrnehmen eines Blockierens einer Passagiertür eines Peoplemovers, einer Anzahl von Passagieren in dem Peoplemover und von Positionen, Körperposen und Aktivitäten der Passagiere mit den Merkmalen des Anspruchs 6.

Mit der erfindungsgemäßen Anordnung von TOF-Sensoren wird ein Passagierraum eines Peoplemovers erfasst. Die Anordnung besteht aus einem ersten TOF-Sensor und einem zweiten TOF-Sensor. Der erste TOF-Sensor ist derart angeordnet, dass ein erstes Sichtfeld des ersten TOF-Sensors einen Bereich um eine Passagiertür erfasst, um ein Blockieren der Passagiertür zu erfassen und in dem Passagierraum sich befindende Passagiere zu zählen. Der zweite TOF-Sensor ist derart angeordnet, dass ein zweites Sichtfeld des zweiten TOF-Sensors die in dem Passagierraum sich befindenden Passagiere erfasst, um Position, Aktivität und/oder Körperpose der Passagiere zu erfassen und die in dem Passagierraum sich befindenden Passagiere zu zählen.

Ein Peoplemover im Rahmen der Erfindung ist ein universell ausbau- und einsetzbarer Kleinbus, der insbesondere für den Personennahverkehr ausgerüstet werden kann. Der Peoplemover dient der Beförderung von Personen auf kurzen Strecken, zum Beispiel in Städten, auf Werksgeländen, auf Geländen von Forschungseinrichtungen wie zum Beispiel Universitäten oder außeruniversitären Einrichtungen, Flughäfen oder Messen. Abmessungen in Meter des Peoplemover nach Länge, Breite und Höhe betragen 4,65 x 1,95 x 2,50. Der Peoplemover umfasst bevorzugt 10 Sitzplätze und 5 Stehplätze. Abmessungen in Meter des Passagierraums, das heißt des Raums, in dem Passagiere in den Peoplemover ein- und aussteigen und sich während der Beförderung aufhalten, nach Länge, Breite und Höhe betragen 3,00 x 1,85 x 2,20. Das Leergewicht des Peoplemover beträgt zum Beispiel 2 t. Der Peoplemover umfasst bevorzugt ein elektrisches Antriebssystem, vorzugsweise einen elektrischen Achsantrieb mit einer Leistung von 150 kW, und besitzt eine Batteriekapazität für eine Einsatzdauer von bis zu 10 h. Der Peoplemover ist automatisiert betreibbar, vorzugsweise bis zur Automatisierungsstufe SAE Level 5, das heißt vollautomatisiert oder autonom betreibbar.

Der automatisiert betreibbare Peoplemover umfasst eine technische Ausrüstung, insbesondere Umfelderfassungssystem, eine supercomputing Steuereinheit mit künstlicher Intelligenz und intelligente Aktuatoren, die zur Bewältigung einer Fahreraufgabe, einschließlich Längs- und Querführung, den Peoplemover nach Aktivierung einer entsprechenden automatischen Fahrfunktion, insbesondere einer hoch- oder vollautomatisierten Fahrfunktion nach der Norm SAEJ3016, mit einer Fahrzeugsteuerungseinrichtung steuern kann. Der Peoplemover ist insbesondere für SAE Level 3, 4 und 5 ausgestattet. Insbesondere in einer Übergangszeit zum hoch-/vollautomatisierten Fahren wird die Erfindung auf SAE Level 3 und 4 eingesetzt, um daran anschließend auf SAE Level 5 verwendet zu werden.

Auf SAE Level 3 und 4 ist jeweils noch ein Fahrer, der sogenannte Safety Driver, vorgesehen, der auf Anforderungen zum Eingreifen reagiert, das heißt es gibt ein take-over der Steuerung. Der Peoplemover für SAE Level 3 und 4 umfasst eine Fahrerkabine für den Safety Fahrer. Bei SAE Level 5 kann die Fahrerkabine entfallen. Auch bei Wegfall ist die erfindungsgemäße Anordnung weiter verwendbar.

Der Peoplemover umfasst auch eine Passagiertür zum Ein-und Auslass von zu befördernden Personen, das heißt Passagieren. Die Passagiertür ist bevorzugt seitlich zwischen Vorder- und Hinterachse angeordnet. Die Passagiertür ist ausgeführt, automatisiert zu öffnen und schließen in Abhängigkeit eines Wunsches eines Passagiers, in den Peoplemover ein- oder auszusteigen.

Ein TOF-Sensor, das heißt ein Time-Of-Flight-Sensor, ist ein Laufzeitverfahrenssensor. Bei einem TOF-Sensor sammelt jeder Pixel des Sensors einfallendes Licht und misst zugleich die Laufzeit, die das Licht benötigt, um von einer Quelle zu einem Objekt und von dem Objekt zurück zum Pixel zu gelangen. Jeder der Pixel der TOF-Sensoren wandelt Licht in einen elektrischen Strom um. Der Pixel arbeitet mit mehreren Schaltern und jeweils einem Schalter zugeordnetem Speicherelement. Im einfachsten Fall weist jeder Pixel zwei Schalter und zwei Speicherelemente auf. Die Schalter werden mit Aussenden des Strahlenpulses angesteuert und für die Zeitspanne des Strahlenpulses, das heißt die Pulslänge, geöffnet. Dabei sind die Steuersignale der jeweiligen Schalter jeweils um eine Pulslänge zeitlich verschoben.

Wenn ein reflektierter Strahlenpuls verzögert auf den Pixel auftrifft, gelangt nur ein Teil des Strahlenpulses in das erste Speicherelement, der andere Teil wird im zweiten Speicherelement gesammelt. Je nach Distanz verändert sich damit das Verhältnis von gesammeltem Licht im ersten zu gesammelten Licht im zweiten Speicherelement. Durch Auslesen der Pixel und Bestimmen des Verhältnisses der Signale im ersten und im zweiten Speicherelement folgt dann die Entfernung des aufgenommenen Objekts. Die Funktionsweise eines Time-Of-Flight Sensors ist zum Beispiel in WO 2014/195020 A1 offenbart.

Das Sichtfeld ist eines Sensors, im Englischen Field Of View, abgekürzt FOV, genannt, ist der objektseitige Raum, innerhalb dem Objekte erfasst werden können. Das Sichtfeld umfasst eine horizontale Ebene, das horizontale Sichtfeld, und eine vertikale Ebene, das vertikale Sichtfeld.

Mit der erfindungsgemäßen Anordnung ist es damit möglich, eine Blockierung der Passagiertür, eine Anzahl der Passagiere und eine Position, Aktivität und Körperpose der Passagiere mit nur zwei Sensoren zu erfassen. Die TOF-Sensoren haben gegenüber anderen Bildsensoren den Vorteil, dass sie mit der Erfassung einer Szenerie auch direkt Tiefeninformationen liefern, was die Wahrnehmung verbessert. Durch die Tiefeninformationen können mit einem TOF-Sensor auch einzelne Ebenen im Sichtfeld dargestellt werden.

Vorteilhafterweise ist der erste TOF-Sensor derart angeordnet, dass das erste Sichtfeld wenigstens einen Passagier, der den Peoplemover betreten hat und der sich im Bereich der Passagiertür befindet, erfasst. Außerdem oder alternativ ist der erste TOF-Sensor derart angeordnet, dass das erste Sichtfeld wenigstens einen Finger, Fuß und/oder Schuh eines Passagiers im Bereich der Passagiertür erfasst, wenn der Passagier sich außerhalb und/oder innerhalb des Peoplemovers befindet. Dies ist insbesondere für den Zustand vorteilhaft, solange der Peoplemover an einer Haltestelle auf ein- und/oder aussteigende Passagiere wartet. Beispielsweise wartet der Peoplemover auf einen Passagier, der in den Peoplemover einsteigen möchte. Der Passagier steht vor dem Eingangsbereich des Peoplemovers. Die Passagiertür ist geöffnet. Für einen der folgenden Fälle soll der Peoplemover die Passagiertür offen halten und dem Passagier einen Hinweis geben, das Blockieren der Passagiertür zu beenden:
- Passagier betritt den Peoplemover und bleibt im Öffnungs-/Schließbereich der Passagiertür stehen.
- Passagier steht vor dem Eingangsbereich der Passagiertür und geht nicht in den Passagierraum hinein. Allerdings hält der Passagier einen seiner Finger in den Bereich der Passagiertür.
- Passagier steht vor dem Eingangsbereich der Passagiertür und geht nicht in den Passagierraum hinein. Allerdings hält der Passagier einen seiner Füße oder einen Schuh in den Bereich der Passagiertür.
- Mehrere Passagiere, zum Beispiel drei, gehen synchron durch die Passagiertür und bleiben im Öffnungs-/Schließbereich der Passagiertür stehen.
- Passagier befindet sich in dem Peoplemover vor der Passagiertür und geht nicht aus dem Peoplemover hinaus. Allerdings hält der Passagier einen seiner Finger in den Bereich der Passagiertür.
Der Status eines dieser Zustände wird jeweils im Zeitfenster von 1 s. aktualisiert.

Die bevorzugte Anordnung wird anhand eines Koordinatensystems als Bezugssystem beschrieben. Der Koordinatenursprung des Koordinatensystems befindet sich in der Mitte einer Hinterachse des Peoplemovers. Die x-Achse ist entlang der Längsachse des Peoplemovers in Richtung einer Vorderachse des Peoplemovers angeordnet, das heißt positive Zählung in Richtung der Vorderachse, negative Zählung in entgegengesetzter Richtung. Die y-Achse ist senkrecht zu der x-Achse entlang der Querachse des Peoplemovers wegweisend von der Passagiertür angeordnet. Die z-Achse ist jeweils senkrecht zu der x-Achse und der y-Achse wegweisend vom Boden des Peoplemovers angeordnet. In Bezug auf dieses Koordinatensystem ist der erste TOF-Sensor, das heißt ein Bezugspunkt des ersten TOF-Sensors, bei x=1,000 bis x=1,100, vorzugsweise x=1,044, y=-0,600 bis y=-0,200, vorzugsweise y=-0,460 und z=1,700 bis z=2,000, vorzugsweise z=1,900, angeordnet. Der zweite TOF-Sensor, das heißt ein Bezugspunkt des zweiten TOF-Sensors, ist bei x=-0,800 bis x=-0,200, vorzugsweise x=-0,575, y=-0,800 bis y=-0,400, vorzugsweise y=-0,630 und z= 1,800 bis z=2,150, vorzugsweise z=2,077, angeordnet. Durch diese Positionsanordnung wird der Bereich der Passagiertür und der Rest des Passagierraums überraschender Weise besonders vollständig wahrgenommen. Dabei ist eine maximale Reichweite des ersten TOF-Sensors und des zweiten TOF-Sensors von 2 m ausreichend.

Besonders bevorzugt ist der erste TOF-Sensor derart angeordnet ist, dass ein erster Rollwinkel des ersten TOF-Sensors im Bereich von 10° bis 18° liegt, vorzugsweise 14° beträgt, ein erster Nickwinkel des ersten TOF-Sensors im Bereich von 50° bis 60° liegt, vorzugsweise 56° beträgt und ein erster Gierwinkel des ersten TOF-Sensors im Bereich von 6° bis 14° liegt, vorzugsweise 11° beträgt. Der zweite TOF-Sensor ist derart angeordnet, dass ein zweiter Rollwinkel des zweiten TOF-Sensors im Bereich von 10° bis 18° liegt, vorzugsweise 14° beträgt, ein zweiter Nickwinkel des zweiten TOF-Sensors im Bereich von 50° bis 60° liegt, vorzugsweise 56° beträgt und ein zweiter Gierwinkel des zweiten TOF-Sensors im Bereich von -50° bis -40° liegt, vorzugsweise -43° beträgt. Durch diese Winkelanordnung wird der Bereich der Passagiertür und der Rest des Passagierraums überraschender Weise besonders vollständig wahrgenommen, besonders in Kombination mit der erfindungsgemäßen Positionsanordnung. Dabei ist horizontales und vertikales Sichtfeld von jeweils 85° ausreichend.

Die erfindungsgemäße Auswerteeinrichtung nimmt einen Passagierraum eines Peoplemovers wahr. Das bedeutet, dass die Auswertungseinrichtung ausgeführt ist, in Abhängigkeit von Sensorrohdaten ein Umfeld zu interpretieren. Im Englischen wird der Ausdruck perception verwendet. Die Auswerteeinrichtung umfasst wenigstens eine erste Schnittstelle. Die erste Schnittstelle erhält Daten eines ersten TOF-Sensors und eines zweiten TOF-Sensors. Der erste TOF-Sensor und der zweite TOF-Sensor sind nach einer erfindungsgemäßen Anordnung angeordnet. Die Auswerteeinrichtung ist ausgeführt, in Abhängigkeit der Daten des ersten TOF-Sensors ein Blockieren eines Passagiers einer Passagiertür des Peoplemovers vorab zu erkennen und ein erstes Signal zu erzeugen, um die Passagiertür offen zu halten und/oder das Blockieren des Passagiers zu beenden. Ferner ist die Auswerteeinrichtung ausgeführt, in Abhängigkeit der Daten des zweiten TOF-Sensors zu erkennen, welche Position die Passagiere einnehmen, insbesondere ob und ggf. wie viele Passagiere im Passagierraum sitzen, stehen, gehen oder liegen, welche Körperpose, das heißt Körperhaltung die Passagiere einnehmen und welche Aktivität die Personen, beispielsweise Musik hören, Trinken, Buch lesen, etc., ausführen und ein zweites Signal mit Informationen zu Position, Körperpose und/oder Aktivität der Passagiere zu erzeugen. Vorteilhafterweise erfolgt das Bestimmen der Körperposition, der Körperpose und der Aktivität der Passagiere mittels künstlicher Intelligenz, zum Beispiel mit einem künstlichen neuronalen Netzwerk, das Körperposen gelernt hat. Außerdem ist die Auswerteeinrichtung ausgeführt, in Abhängigkeit der Daten des ersten TOF-Sensors oder der Daten des zweiten TOF-Sensors oder einer Fusion der Daten des ersten TOF-Sensors und des zweiten TOF-Sensors die Anzahl der Passagiere in dem Passagierraum zu bestimmen und ein drittes Signal mit der Information zu Anzahl der Passagiere zu erzeugen. Ferner umfasst die Auswerteeinrichtung wenigstens eine zweite Schnittstelle. Die zweite Schnittstelle stellt das erste Signal einer Stelleinrichtung der Passagiertür oder dem die Passagiertür blockierenden Passagier bereit. Ferner stellt die zweite Schnittstelle das zweite Signal und/oder das dritte Signal einer Steuerungseinrichtung des Peoplemovers und/oder für eine Anzeige des Peoplemovers bereit.

Eine Auswerteeinrichtung ist eine Vorrichtung, die eingehende Informationen verarbeitet und ein aus dieser Verarbeitung resultierendes Ergebnis ausgibt. Insbesondere ist eine Auswerteeinrichtung eine elektronische Schaltung, wie zum Beispiel eine zentrale Prozessoreinheit oder ein Grafikprozessor. Die Auswerteeinrichtung ist vorzugsweise als ein System-on-a-Chip einer elektronischen Steuereinheit, im Englischen Electronic Control Unit, abgekürzt ECU, genannt, realisiert, das heißt alle oder zumindest ein großer Teil der Funktionen sind auf einem Chip integriert. Der Chip umfasst beispielsweise einen Mehrkernprozessor mit mehreren zentralen Verarbeitungsprozessoren, im Englischen als Central Processing Unit, abgekürzt CPU, bezeichnet. Der Chip umfasst auch mehrere Grafikprozessoren, im Englischen als Graphic Processing Unit, abgekürzt GPU, bezeichnet. Grafikprozessoren eignen sich besonders vorteilhaft für paralleles Prozessieren von Abläufen. Mit einem derartigen Aufbau ist die Auswerteeinrichtung skalierbar, das heißt die Auswerteeinrichtung kann für verschiedene SAE-Level angepasst werden.

Eine Schnittstelle ist eine mechanisches und/oder elektrisches Bauteil zwischen wenigstens zwei Funktionseinheiten, an der ein Austausch von logischen Größen, zum Beispiel Daten, oder physikalischen Größen, zum Beispiel elektrischen Signalen, erfolgt, entweder nur unidirektional oder bidirektional. Der Austausch kann analog oder digital erfolgen. Der Austausch kann drahtlos oder drahtgebunden erfolgen.

Künstliche Intelligenz ist ein Oberbegriff für die Automatisierung intelligenten Verhaltens. Beispielsweise lernt ein intelligenter Algorithmus, zweckgerichtet auf neue Informationen zu reagieren. Ein künstliches neuronales Netzwerk, im Englischen als Artificial Neural Network bezeichnet, ist ein intelligenter Algorithmus. Ein intelligenter Algorithmus ist ausgeführt zu lernen, zweckgerichtet auf neue Informationen zu reagieren. Das künstliche neuronale Netzwerk hat beispielsweise gelernt, Körperpositionen, Körperposen und/oder Aktivitäten der Passagiere zu klassifizieren.

Die zweite Schnittstelle ist beispielsweise eine Schnittstelle zu einem Stellmotor der Passagiertür. Durch die Übertragung des ersten Signals, das zum Beispiel ein Strompuls bestimmter Amplitude und Dauer sein kann, an den Stellmotor hält der Stellmotor die Passagiertür weiterhin offen. Alternativ oder zusätzlich leitet die zweite Schnittstelle das erste Signal an eine akustische, visuelle und/oder taktile Ausgabeeinrichtung weiter, die das erste Signal für den Passagier hörbar, sichtbar und/oder fühlbar macht. Beispielsweise ist eine Anzeige vorgesehen, die dem Passagier anzeigt, den Bereich der Passagiertür zu verlassen.

Das zweite Signal wird mittels der zweiten Schnittstelle einer Steuerungseinrichtung des Peoplemovers bereitgestellt. Es liegt im Rahmen der Erfindung, dass die Auswerteeinrichtung in die Steuerungseinrichtung integriert ist. Die Steuerungseinrichtung steuert in Abhängigkeit des zweiten Signals mittels elektromechanischer, vorzugsweise intelligenter, Aktuatoren die Längs- und/oder Querführung des Peoplemovers. Damit kann vorteilhafterweise die Fahrweise des Peoplemovers an Anzahl der Passagiere, deren Position, Pose und Aktivität angepasst werden, um den Passagieren eine möglichst angenehme und unfallfreie Fahrt zu bieten.

Das dritte Signal wird mittels der zweiten Schnittstelle beispielsweise einer von außerhalb des Peoplemovers sichtbaren Anzeige des Peoplemovers bereitgestellt, um wartenden Passagieren die Anzahl der im Peoplemover sich befindenden Passagieren und damit die Anzahl möglicher freier Plätze oder die Information, dass der Peoplemover voll besetzt ist, mitzuteilen. Die Anzahl der Personen und/oder die Information über Körperposition, Pose und Aktivität der Passagiere kann auch einer externen Kontrollstelle übermittelt werden. In diesem Fall ist die zweite Schnittstelle vorzugsweise als eine drahtlose Schnittstelle ausgeführt. Damit erhält ein remote-Betreiber des Peoplemovers Informationen zu Passagieren innerhalb des Passagierraums.

Das erfindungsgemäße Wahrnehmungssystem dient der Wahrnehmung, das heißt perception, eines Blockierens einer Passagiertür eines Peoplemovers, einer Anzahl von Passagieren in dem Peoplemover und von Positionen, Körperposen und Aktivitäten der Passagiere. Das Wahrnehmungssystem besteht aus einen ersten TOF-Sensor und einen zweiten TOF-Sensor, die nach einer erfindungsgemäßen Anordnung angeordnet sind, und einer erfindungsgemäßen Auswerteeinrichtung. Es ergeben sich die genannten Vorteile der erfindungsgemäßen Anordnung und der erfindungsgemäßen Auswerteeinrichtung.

Die Erfindung wird anhand folgender Figuren und der dazugehörigen Beschreibung beispielhaft erläutert. Es zeigen:
Fig. 1 eine Darstellung eines Ausführungsbeispiels eines erfindungsgemäßen Peoplemovers,
Fig. 2 eine Seitendarstellung eines Ausführungsbeispiels eines erfindungsgemäßen Peoplemovers,
Fig. 3a eine Draufsicht auf ein Ausführungsbeispiel einer erfindungsgemäßen Anordnung eines Ausführungsbeispiels eines erste TOF-Sensors,
Fig. 3b eine Seitendarstellung des Ausführungsbeispiels aus Fig. 3a,
Fig. 3c eine perspektivische Darstellung des Ausführungsbeispiels aus Fig. 3a,
Fig. 3d eine schematische Darstellung eines Ausführungsbeispiels einer Winkelanordnung des ersten TOF-Sensors,
Fig. 3e eine schematische Darstellung des Sichtfeldes des Ausführungsbeispiels aus Fig. 3a,
Fig. 3f eine reale Darstellung des Sichtfeldes des Ausführungsbeispiels aus Fig. 3a,
Fig. 4a eine Draufsicht auf ein Ausführungsbeispiel einer erfindungsgemäßen Anordnung eines Ausführungsbeispiels eines zweiten TOF-Sensors,
Fig. 4b eine Seitendarstellung des Ausführungsbeispiels aus Fig. 4a,
Fig. 4c eine perspektivische Darstellung des Ausführungsbeispiels aus Fig. 4a,
Fig. 4d eine schematische Darstellung eines Ausführungsbeispiels einer Winkelanordnung des zweiten TOF-Sensors,
Fig. 4e eine schematische Darstellung des Sichtfeldes des Ausführungsbeispiels aus Fig. 4a,
Fig. 4f eine reale Darstellung des Sichtfeldes des Ausführungsbeispiels aus Fig. 4a und
Fig. 5 eine Darstellung eines Ausführungsbeispiels eines erfindungsgemäßen Wahrnehmungssystems.

In den Figuren bezeichnen gleiche Bezugszeichen gleiche oder funktionsähnliche Bezugsteile. Übersichtshalber sind in den einzelnen Figuren nur die für das Verständnis der jeweiligen Figur relevanten Bezugszeichen angegeben. Dabei behalten die nicht mit Bezugszeichen versehenen Bezugsteile ihre ursprüngliche Bedeutung und Funktion bei.

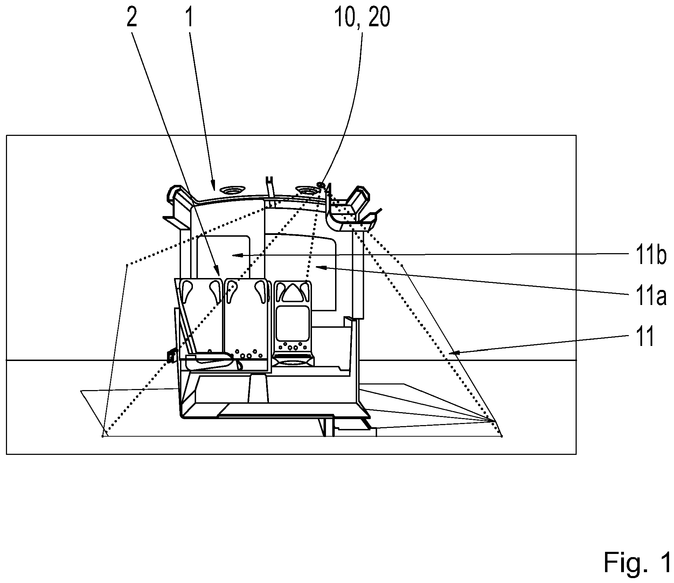

Fig. 1 zeigt einen Ausschnitt eines erfindungsgemäßen Peoplemovers 1. Der Peoplemover 1 umfasst einen Passagierraum 2. Der Passagierraum 2 wird von einem ersten TOF-Sensor 10 und einem zweiten TOF-Sensor 20 erfasst, von denen in Fig. 1 nur der erste TOF-Sensor dargestellt ist. Der erste TOF-Sensor 10 besitzt ein erstes Sichtfeld 11. Teile oder Bereiche des ersten Sichtfeldes 11 können durch Gegenstände verdeckt sein und sind daher von dem ersten TOF-Sensor 10 nicht erfassbar. und der zweite TOF-Sensor 20. Ein erstes sichtbares Sichtfeld 11 a, das heißt der Teil des ersten Sichtfeldes 11, der von dem ersten TOF-Sensor 10 vollständig erfasst wird, erfasst den Bereich einer Passagiertür 3. In diesem ersten sichtbaren Sichtfeld 11a ist eine erste sichtbare Ebene 11b. Entsprechendes gilt für den zweiten TOF-Sensor 20.

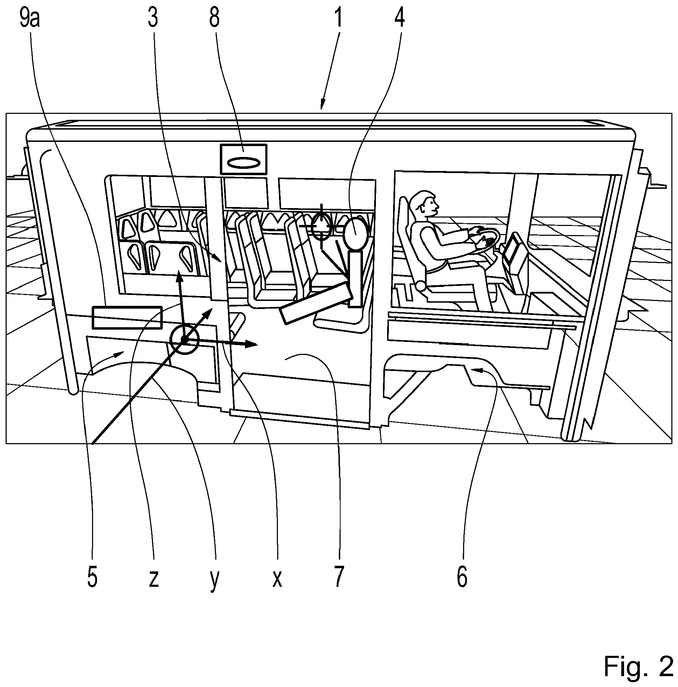

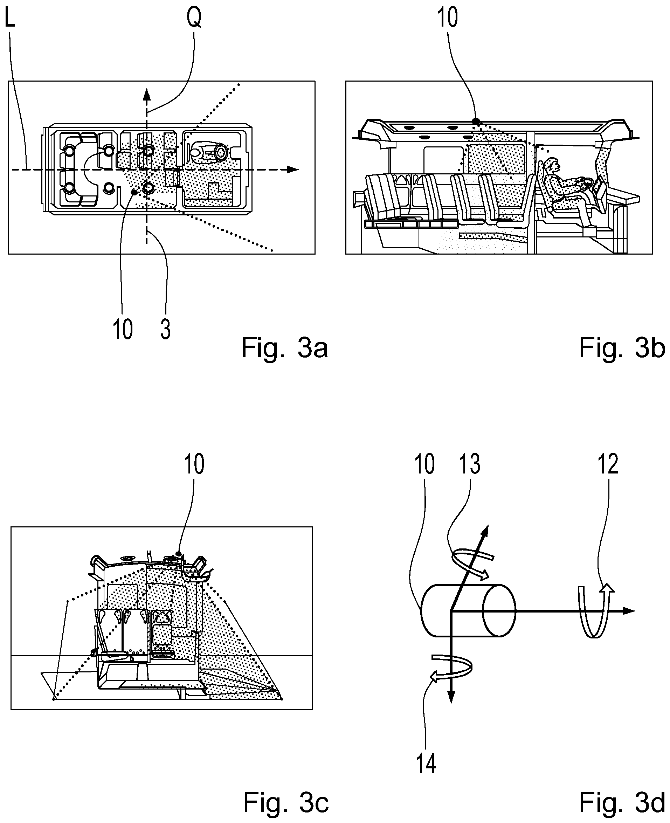

Fig. 2 zeigt die Grundrisse des Peoplemovers 1. Der Peoplemover 1 wird hier noch von einem Fahrer gefahren. Der Fahrer sitzt in einer Fahrerkabine. Die Passagiertür 3 wird mittels einer Stelleinrichtung 8 in Form eines Stellmotors automatisiert geöffnet und geschlossen. In dem Passagierraum 2 sitzt ein Passagier 4. Passagiere können auch Stehplätze einnehmen, das heißt auf einem Boden des Peoplemovers 1 stehen. Gezeigt sind auch die Bereiche einer Vorderachse 6 und einer Hinterachse 5 des Peoplemovers 1. Bei der Vorderachse 6 und/oder der Hinterachse 5 handelt es sich um eine elektrisch angetriebene Achse. Eine Steuerungseinrichtung 9a steuert einen E-Motor der Hinterachse 5 und eine Lenkung des Peoplemovers 1. Ein kartesisches Koordinatensystem hat seinen Koordinatenursprung in der Mitte der Hinterachse 5. Eine x-Achse verläuft parallel zu einer Längsachse L des Peoplemovers 1. Eine y-Achse verläuft parallel zu einer Querachse Q des Peoplemovers 1. Eine z-Achse verläuft vom Boden des Peoplemovers 1 wegweisend. Längsachse L und Querachse Q sind in Fig. 3a gezeigt.

Die Fig. 3a bis 3c zeigen in verschiedenen Darstellungen die Anordnung des ersten TOF-Sensors 10. Der erste TOF-Sensor 10 ist in Bezug auf das in Fig. 2 gezeigte Koordinatensystem bei x=1,044, y=-0,460 und z=1,90 angeordnet. Ein erster Rollwinkel 12 beträgt 14°. Ein erster Nickwinkel 13 beträgt 56°. Ein erster Gierwinkel 14 beträgt 11°.

Die Achsen, die den ersten Rollwinkel 12, den ersten Nickwinkel 13 und den ersten Gierwinkel 14 definieren, sind in Fig. 3d gezeigt.

Diese Positions- und Winkelanordnung ergibt hinsichtlich Erfassung einer Blockierung der Passagiertür 3 und Passagierenanzahl überraschenderweise ein besonders vorteilhaftes erstes Sichtfeld 11 bei einem horizontalen und vertikalen Sichtfeld von jeweils 85° und einer maximalen Reichweite des ersten TOF-Sensors von 2 m.

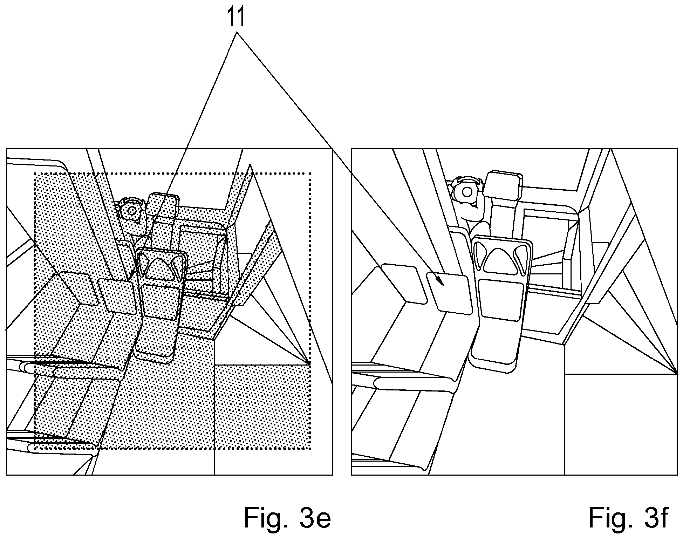

Dieses besonders vorteilhafte erste Sichtfeld 11 ist schematisch in Fig. 3e und als Aufnahme des ersten TOF-Sensors 10 in Fig. 3f gezeigt.

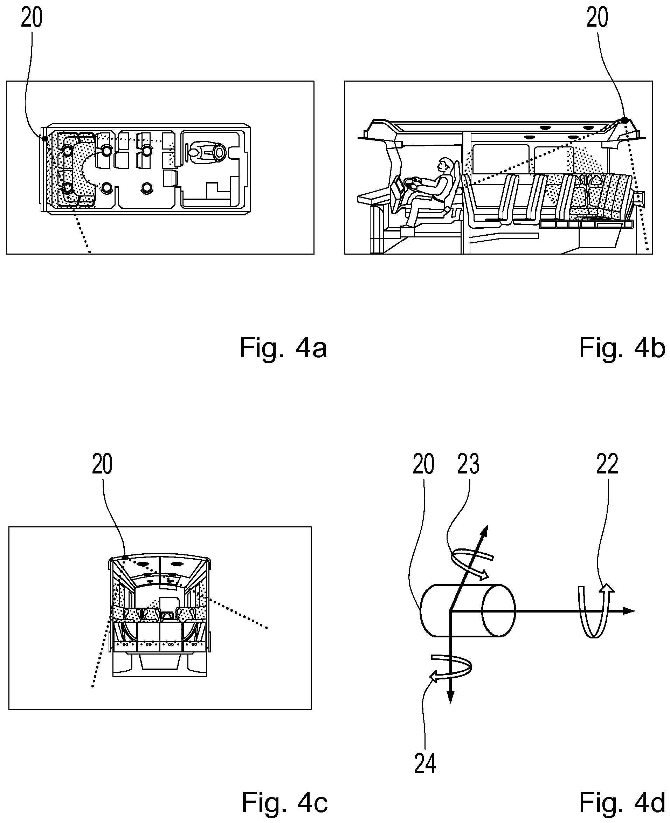

Die Fig. 4a bis 4c zeigen in verschiedenen Darstellungen die Anordnung des zweiten TOF-Sensors 20. Der zweite TOF-Sensor 20 ist in Bezug auf das in Fig. 2 gezeigte Koordinatensystem bei x=-0,575, y=-0,630 und z=2,077 angeordnet. Ein zweiter Rollwinkel 22 beträgt 14°. Ein zweiter Nickwinkel 23 beträgt 56°. Ein zweiter Gierwinkel 24 beträgt -43°.

Die Achsen, die den zweiten Rollwinkel 22, den zweiten Nickwinkel 23 und den zweiten Gierwinkel 24 definieren, sind in Fig. 4d gezeigt.

Diese Positions- und Winkelanordnung ergibt hinsichtlich Erfassung von Position, Pose und Aktivität eines Passagiers und Passagierenanzahl überraschenderweise ein besonders vorteilhaftes zweites Sichtfeld 21 bei einem horizontalen und vertikalen Sichtfeld von jeweils 85° und einer maximalen Reichweite des zweiten TOF-Sensors von 2 m.

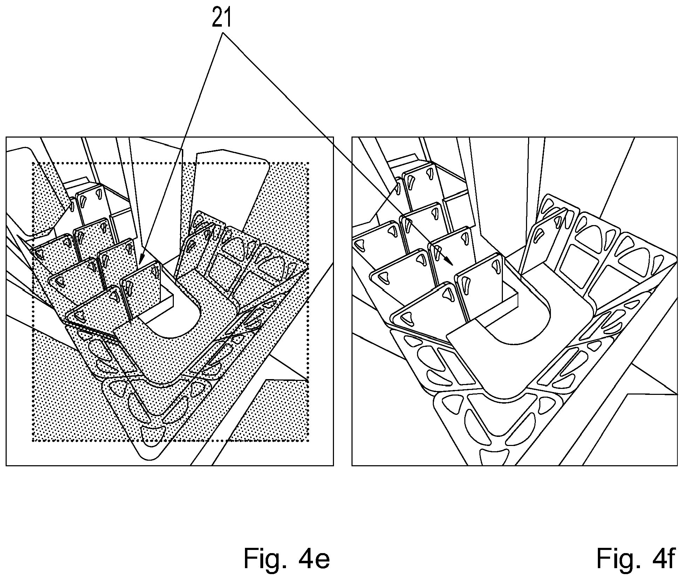

Dieses besonders vorteilhafte zweite Sichtfeld 21 ist schematisch in Fig. 4e und als Aufnahme des zweiten TOF-Sensors 20 in Fig. 4f gezeigt.

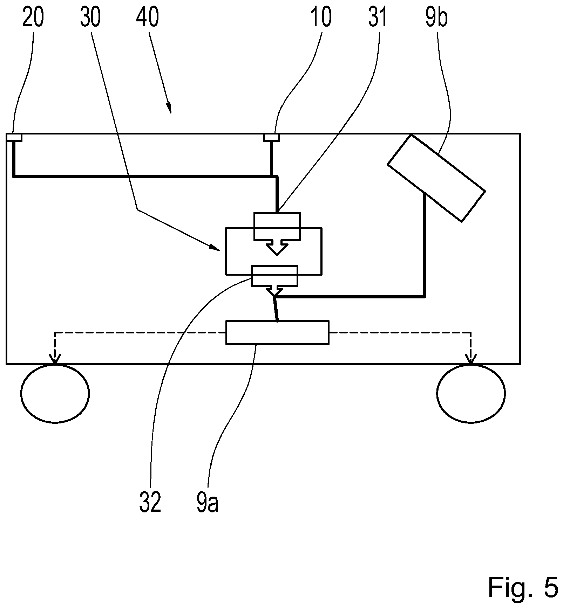

Fig. 5 zeigt ein Ausführungsbeispiel eines erfindungsgemäßen Wahmehmungssystems 40 in dem Peoplemover 1. Das Wahrnehmungssystem 40 umfasst eine erfindungsgemäße Anordnung des ersten TOF-Sensors 10 und des zweiten TOF-Sensors 20. Ferner umfasst das Wahrnehmungssystem eine Auswerteeinrichtung 30.

Die Auswerteeinrichtung 30 ist beispielsweise eine Rechnerplattform. Die Auswerteeinrichtung 30 umfasst eine erste Schnittstelle 31 zu dem ersten TOF-Sensor 10 und dem zweiten TOF-Sensor 20. Über die erste Schnittstelle 31 erhält die Auswerteeinrichtung 30 Rohdaten des ersten TOF-Sensors 10 und des zweiten TOF-Sensors 20. Diese Rohdaten werden von der Auswerteeinrichtung 30 prozessiert, zum Beispiel nach einem Algorithmus zur Personenerkennung und -klassifizierung. Anhand der prozessierten Rohdaten erkennt die Auswerteeinrichtung 30, ob die Passagiertür 3 von einem Passagier 4 blockiert ist und gibt ein erstes Signal über eine zweite Schnittstelle 32 an die Stelleinrichtung 8 aus, um die Passagiertür ggf. weiter offen zu halten. Ferner wird das erste Signal einer Anzeige 9b bereitgestellt, um dem Passagier 4, der die Passagiertür 3 blockiert, anzuzeigen, sich aus dem Bereich der Passagiertür 3 zu entfernen. Die Erfassung des ersten TOF-Sensors 10, die Stelleinrichtung 8 und die Anzeige 9b sind untereinander gekoppelt. Das heißt, wenn der erste TOF-Sensor 10 erkennt, dass der Bereich der Passagiertür 3 frei ist, schließt die Stelleinrichtung 8 die Passagiertür 3 und die Anzeige 9b erlischt. Anhand der prozessierten Rohdaten erkennt die Auswerteeinrichtung 30 außerdem Position, Pose und Aktivität von Passagieren 4 in dem Passagierraum 2 und gibt ein entsprechendes zweites Signal über die zweite Schnittstelle 32 an die Steuerungseinrichtung 9a aus, um den Peoplemover 1 in Abhängigkeit der Position, Pose und/oder Aktivität der Passagiere 4 zu steuern. Ferner erkennt die Auswerteeinrichtung 30 anhand der prozessierten Rohdaten, vorzugsweise anhand der Fusion der Rohdaten des ersten TOF-Sensors 10 und der Rohdaten des zweiten TOF-Sensors 20, wie viele Passagiere 4 in dem Passagierraum 2 sind. Diese Anzahl an Passagieren 4 wird als drittes Signal der Anzeige 9b bereitgestellt, um die Passagiere 4 über die Anzahl der Passagiere 4 zu informieren.

### Bezugszeichen

- 1: Peoplemover
- 2: Passagierraum
- 3: Passagiertür
- 4: Passagier
- 5: Hinterachse
- 6: Vorderachse
- 7: Boden
- 8: Stelleinrichtung
- 9a: Steuerungseinrichtung
- 9b: Anzeige
- 10: erster TOF-Sensor
- 11: erstes Sichtfeld
- 11a: erstes sichtbares Sichtfeld
- 11b: erste sichtbare Ebene im ersten Sichtfeld
- 12: erster Rollwinkel
- 13: erster Nickwinkel
- 14: erster Gierwinkel
- 20: zweiter TOF-Sensor
- 21: zweites Sichtfeld
- 22: zweiter Rollwinkel
- 23: zweiter Nickwinkel
- 24: zweiter Gierwinkel
- 30: Auswerteeinrichtung
- 31: erste Schnittstelle
- 32: zweite Schnittstelle
- 40: Wahrnehmungssystem
- L: Längsachse
- Q: Querachse
- x: x-Achse
- y: y-Achse
- z: z-Achse

## Patentansprüche

1. Anordnung von TOF-Sensoren zur Erfassung eines Passagierraums (2) eines Peoplemovers (1) bestehend aus
• einem ersten TOF-Sensor (10), der derart angeordnet ist, dass ein erstes Sichtfeld (11) des ersten TOF-Sensors (10) einen Bereich um eine Passagiertür (3) erfasst, um ein Blockieren der Passagiertür (3) zu erfassen und in dem Passagierraum (2) sich befindende Passagiere (4) zu zählen, und
• einem zweiten TOF-Sensor (20), der derart angeordnet ist, dass ein zweites Sichtfeld (21) des zweiten TOF-Sensors (20) die in dem Passagierraum (2) sich befindenden Passagiere (4) erfasst, um Position, Aktivität und/oder Körperpose der Passagiere (4) zu erfassen und die in dem Passagierraum (2) sich befindenden Passagiere (4) zu zählen.

2. Anordnung nach Anspruch 1, wobei der erste TOF-Sensor (10) derart angeordnet ist, dass das erste Sichtfeld (11)
• wenigstens einen Passagier (4), der den Peoplemover (1) betreten hat und der sich im Bereich der Passagiertür (3) befindet, erfasst, und/oder
• wenigstens einen Finger, Fuß und/oder Schuh eines Passagiers (4) im Bereich der Passagiertür (3) erfasst, wenn der Passagier (4) sich außerhalb und/oder innerhalb des Peoplemovers (1) befindet.

3. Anordnung nach Anspruch 1 oder 2, wobei in Bezug auf
• ein Koordinatensystem
∘ mit Koordinatenursprung in der Mitte einer Hinterachse (5) des Peoplemovers (1),
∘ x-Achse entlang der Längsachse (L) des Peoplemovers (1) in Richtung einer Vorderachse (6) des Peoplemovers (1),
∘ y-Achse senkrecht zu der x-Achse entlang der Querachse (Q) des Peoplemovers (1) wegweisend von der Passagiertür (3) und
∘ z-Achse jeweils senkrecht zu der x-Achse und der y-Achse wegweisend vom Boden (7) des Peoplemovers (1)
• der erste TOF-Sensor (10) bei
∘ x=1,000 bis x=1,100, vorzugsweise x=1,044,
∘ y=-0,600 bis y=-0,200, vorzugsweise y=-0,460 und
∘ z=1,700 bis z=2,000, vorzugsweise z=1,900 und
• der zweite TOF-Sensor (20) bei
∘ x=-0,800 bis x=-0,200, vorzugsweise x=-0,575,
∘ y=-0,800 bis y=-0,400, vorzugsweise y=-0,630 und
∘ z= 1,800 bis z=2,150, vorzugsweise z=2,077
angeordnet sind.

4. Anordnung nach einem der vorangehenden Ansprüchen, wobei
• der erste TOF-Sensor (10) derart angeordnet ist, dass
∘ ein erster Rollwinkel (12) des ersten TOF-Sensors (10) im Bereich von 10° bis 18° liegt, vorzugsweise 14° beträgt,
∘ ein erster Nickwinkel (13) des ersten TOF-Sensors (10) im Bereich von 50° bis 60° liegt, vorzugsweise 56° beträgt und
∘ ein erster Gierwinkel (14) des ersten TOF-Sensors (10) im Bereich von 6° bis 14° liegt, vorzugsweise 11° beträgt, und
• der zweite TOF-Sensor (20) derart angeordnet ist, dass
∘ ein zweiter Rollwinkel (22) des zweiten TOF-Sensors (20) im Bereich von 10° bis 18° liegt, vorzugsweise 14° beträgt,
∘ ein zweiter Nickwinkel (23) des zweiten TOF-Sensors (20) im Bereich von 50° bis 60° liegt, vorzugsweise 56° beträgt und
∘ ein zweiter Gierwinkel (24) des zweiten TOF-Sensors (20) im Bereich von -50° bis -40° liegt, vorzugsweise -43° beträgt.

5. Auswerteeinrichtung (30) zum Wahrnehmen eines Passagierraums (2) eines Peoplemovers (1) umfassend
• wenigstens eine erste Schnittstelle (31), um Daten eines ersten TOF-Sensors (10) und eines zweiten TOF-Sensors (20), die nach einer Anordnung nach einem der Ansprüche 1 bis 4 angeordnet sind, zu erhalten,
• wobei die Auswerteeinrichtung (30) ausgeführt ist,
∘ in Abhängigkeit der Daten des ersten TOF-Sensors (10) ein Blockieren eines Passagiers (4) einer Passagiertür (3) des Peoplemovers (1) vorab zu erkennen und ein erstes Signal zu erzeugen, um die Passagiertür (3) offen zu halten und/oder das Blockieren des Passagiers (4) zu beenden,
∘ in Abhängigkeit der Daten des zweiten TOF-Sensors (20) zu erkennen, welche Position die Passagiere (4) einnehmen, insbesondere ob und ggf. wie viele Passagiere (4) im Passagierraum (2) sitzen, stehen, gehen oder liegen, welche Körperpose die Passagiere (4) einnehmen und welche Aktivität die Personen (4) ausführen und ein zweites Signal mit Informationen zu Position, Körperpose und/oder Aktivität der Passagiere (4) zu erzeugen, und
∘ in Abhängigkeit der Daten des ersten TOF-Sensors (10) oder der Daten des zweiten TOF-Sensors (20) oder einer Fusion der Daten des ersten TOF-Sensors (10) und des zweiten TOF-Sensors (20) die Anzahl der Passagiere (4) in dem Passagierraum (2) zu bestimmen und ein drittes Signal mit der Information zu Anzahl der Passagiere (4) zu erzeugen,
und
• wenigstens eine zweite Schnittstelle (32), um
∘ das erste Signal einer Stelleinrichtung (8) der Passagiertür (3) oder dem die Passagiertür (3) blockierenden Passagier (4) bereitzustellen, und
∘ das zweite Signal und/oder das dritte Signal einer Steuerungseinrichtung (9a) des Peoplemovers und/oder für eine Anzeige (9b) des Peoplemovers (1) bereitzustellen.

6. Wahrnehmungssystem (40) zum Wahrnehmen eines Blockierens einer Passagiertür (3) eines Peoplemovers (1), einer Anzahl von Passagieren (4) in dem Peoplemover (1) und von Positionen, Körperposen und Aktivitäten der Passagiere (4) bestehend aus
• einem ersten TOF-Sensor (10) und einen zweiten TOF-Sensor (20), die nach einer Anordnung nach einem der Ansprüche 1 bis 4 angeordnet sind, und
• einer Auswerteeinrichtung (30) nach Anspruch 5.
